# EUROPÄISCHE PATENTSCHRIFT

(11) **EP 2 052 103 B1**
(45) Veröffentlichungstag und Bekanntmachung des Hinweises auf die Patenterteilung: **08.12.2010**
(21) Anmeldenummer: 08785942.7
(22) Anmeldetag: 07.07.2008
(51) Int. Cl.: D04H 1/74, D04H 13/00, B32B 5/12, B32B 5/26

(54) **VERFAHREN ZUR HERSTELLUNG EINES GRUNDVLIESSTOFFES ALS BESCHICHTUNGSTRÄGER**
METHOD FOR PRODUCING A BASE NON-WOVEN FIBRE AS SUPPORT FOR A COATING
PROCÉDÉ POUR PRODUIRE UN NON-TISSÉ DE BASE SERVANT DE SUPPORT DE REVÊTEMENT

(30) Priorität: 22.08.2007 DE 102007039773; 23.05.2008 DE 102008024943
(43) Veröffentlichungstag der Anmeldung: 29.04.2009
(73) Patentinhaber: Eswegee Vliesstoff GmbH, 95028 Hof (DE)
(72) Erfinder: SCHLOTTER, Rudolf, 95028 Hof (DE); FRIEDRICH, Peter, 95111 Rehau (DE); HECK, Jürgen, 90429 Nürnberg (DE)
(74) Vertreter: Meissner, Bolte & Partner
(86) Internationale Anmeldenummer: PCT/EP2008/058755
(87) Internationale Veröffentlichungsnummer: WO 2009/024393

(56) Entgegenhaltungen:
- EP-A- 0 122 967
- EP-A- 1 236 818
- EP-A- 1 477 300
- DD-A5- 292 489
- DE-A1- 2 260 677

## Beschreibung

Die Erfindung betrifft ein Verfahren zur Herstellung eines Grundvliesstoffes als Beschichtungsträger, auf der Basis einer Polyesterfaser (PES)-Mischung durch Kreuz- und Längslegung des Faserflors gemäß Oberbegriff des Patentanspruchs 1.

Aus der DE 34 05 109 A1 ist eine hochelastische bituminöse Dachbahn und ein Verfahren zu deren Herstellung vorbekannt. Diese vorbekannte Dachbahn besteht aus einer Verfestigungseinlage aus einem Polyester-Spinnvliesstoff. Diese Einlage ist weiterhin mit Bitumen beschichtet. Der Polyester-Spinnvliesstoff besitzt über die gesamte Fläche eine Porendurchsetzung, um die gewünschte Dampfdurchlässigkeit zu erreichen. Der Polyester-Vliesstoff wiederum besteht aus in Streutextur abgelegten Fäden, die mit Hilfe eines polymeren schmelzbaren Bindemittels in Form von Bindefasern unter Anwendung von Druck und Hitze verfestigt sind. In einer Ausgestaltung kommen sogenannte Bikomponentenfasern oder -fäden zum Einsatz, deren Mantel eine schmelzbare polymere Bindesubstanz ist und deren Kern aus Polyester besteht.

Bei der wasserdichten und wasserdampfdurchlässigen Mehrschichtfolie zur Abdichtung beim Hausbau im Dachbereich gemäß DE 10 2005 038 863 A1 ist eine Basisschicht aus einem ersten Kunststoffmaterial und eine mit der Basisschicht gekoppelte Wasserdampfdurchlässigkeits-kontrollierende zweite Schicht aus einem zweiten Kunststoffmaterial vorhanden. Die Basisschicht ist wasserdicht für entspanntes Wasser und die Mehrschichtfolie selbst ist dehnbar und reißfest. Die Wasserdampfdurchlässigkeits-kontrollierende Schicht ist mit makroskopischen Löchern versehen, durch deren Anordnung ein definierter Flächenanteil aus dem zweiten Kunststoffmaterial entfernt ist, so dass sich die Wasserdampfdurchlässigkeit einstellt.

Aus dem Gebrauchsmuster 298 01 953 ist eine bahnförmige Membran, bestehend aus einer ersten Vliesschicht, einer zweiten Vliesschicht und aus einer zwischen ihnen angeordneten filmartigen Schicht zur Anordnung zwischen Räumen mit einer Luftfeuchte- und Luftdruckdifferenz vorbekannt, wobei die Membranschicht wasserdicht und wasserdampfdiffusionsoffen sowie außenbewitterungstüchtig und schwer entflammbar ausgerüstet ist. Die filmartige Schicht besteht aus einer mikroporösen Folie, z.B. aus einem Polyolefin, einem Copolyester, einem Copolyamid oder aus anderen thermoplastischen Rohstoffen. Die Vliesschichten sind zur Erkennbarkeit unterschiedlich gefärbt.

Bei dem laminierten Bahnenmaterial nach DE 601 00 878 T2 wird von einem Vliesgewebe mit einer flächenbezogenen Masse von 30g/m² oder weniger ausgegangen, hergestellt aus ultrafeinen Fasern auf Polyolefin-Basis. Weiterhin ist ein wärmebindendes Vliesgewebe und ein ergänzendes Spinnvliesgewebe Bestandteil des Bahnenmaterials, wobei die Vliesgewebeschichten einen Flächenverbund bilden sollen. Aus der EP 1 477 300 A2 ist ein Verfahren zur Herstellung eines Grundvliesstoffes bekannt, wobei der Grundvliesstoff als Beschichtungsträger dient. Der Grundvliesstoff besteht aus einer Polyesterfaser-Mischung erhalten durch Kreuz- und Längslegung des Faserflors mit definiertem Verhältnis des Fasereinzuges zwischen den beiden Kreuz- und der Längskrempel. Der Grundvliesstoff wird mit einem Binder beidseitig ausgerüstet, wobei oberhalb der Vernetzungstemperatur des Binders oder eines Bindersystems eine Aushärtung vorgenommen wird. Der Aufbau des Grundvliesstoffes ist 3-lagig, wobei eine längsgelegte Schicht zwischen zwei kreuzgelegten Schichten gegeben ist.

Insbesondere Beschichtungsträger für den Einsatz als Dachunterspannbahnen müssen ganz unterschiedlichen Anforderungen genügen. Zum einen soll eine diffusionsoffene, aber wasserdichte Beschichtung aus einem elastischen und strapazierfähigen Material gebildet werden. Zum anderen soll eine extrem hohe mechanische Belastbarkeit bei gleichermaßen guter Verlegefreundlichkeit gegeben sein.

Für die Ausführung und die Eigenschaften von Unterdeck- und Unterspannbahnen sind die einschlägigen Normen, insbesondere die IN 13859-1 und -2 zu beachten.

Maßgeblich für die Eigenschaften von Unterdeckbahnen ist neben den aufgebrachten Funktionsschichten das Träger- oder Grundvlies, auf dem dann die Beschichtungen in verschiedenen Verfahren aufgebracht werden.

Aus dem Vorgenannten ist es daher Aufgabe der Erfindung, ein weiterentwickeltes Verfahren zur Herstellung eines Grundvliesstoffes als Beschichtungsträger, auf der Basis einer Polyesterfaser-Mischung, gebildet durch Kreuz- und Längslegung des Faserflors, anzugeben, wobei eine ausreichende Dimensionsstabilität in Längsrichtung gegeben ist, um nachfolgende Beschichtungen unbeschadet zu überstehen, und wobei gleichzeitig der Grundvliesstoff eine glatte Struktur besitzen soll, so dass bei nachfolgenden Beschichtungsschritten keine Fasern störend aus der Vliesbahnebene bzw. Vliesbahnoberfläche hervorstehen.

Die Lösung der Aufgabe der Erfindung erfolgt durch ein Verfahren zur Herstellung eines Grundvliesstoffes als Beschichtungsträger gemäß der Lehre nach Patentanspruch 1, wobei die Unteransprüche mindestens zweckmäßige Ausgestaltungen und Weiterbildungen darstellen.

Erfindungsgemäß wird von einem Verfahren zur Herstellung eines Grundvliesstoffes als Beschichtungsträger, auf der Basis einer Polyesterfaser-Mischung durch Kreuz- und Längslegung des Faserflors ausgegangen.

Das Verhältnis des Fasereinzugs zwischen Kreuz- und Längskrempel liegt bei im Wesentlichen 5:3, wobei eine erste Grundvliesseite aus kreuzgelegtem Faserflor und eine zweite Grundvliesseite aus längsgelegtem Faserflor besteht. Die Vliesschichten besitzen ein Flächengesamtgewicht von ca. 70 - 300 g/m².

Aufgrund der Verwendung eines kombinierten PES Vlieses ergibt sich ein Schicht- bzw. Gradientenaufbau des Grundvlieses. Die Verfestigung einer Kombination aus einer kreuzgelegte Faserflorlage mit einer Längsflorlage mittels Hochdruckwasserstrahlen, führt zu einer teilweisen Vermischung der Flore an den aufeinander treffenden Grenzflächen. In der Folge liegen keine exakt getrennten Schichten der unterschiedlich ausgestalteten Florlagen mehr vor, vielmehr bildet sich ein Gradient in der Verteilung der Faserorientierung des verfestigten Vlieses aus.

Weiterhin erfolgt verfahrensgemäß eine Ausrüstung der ersten und der zweiten Grundvliesseite mit einem Binder oder einer Bindermischung in einem Arbeitsschritt. Anschließend wird eine Behandlung oberhalb der Vernetzungstemperatur des Binders vorgenommen, um eine gezielte Glättung, Verdichtung und/oder Versteifung des Grundvliesstoffes zu erreichen.

Der Binder oder das Bindergemisch kann mittels Schaum- oder Pastenauftrag auf die jeweilige Grundvliesseite aufgebracht werden.

Der Schaumauftrag erfolgt bevorzugt mittels Rakel und der Pastenauftrag bevorzugt mittels Luftrakel bzw. Schlitzdüse.

Auf der ersten Grundvliesseite ist ein Binderstrich in einer Menge von ca. 5 - 50 g/m² aufgebracht. Die Menge des Binderstrichs auf der zweiten Grundvliesseite beträgt ca. 15g/m².

Dem Binderstrich kann zur besseren Erkennbarkeit der betreffenden Grundvliesseite eine Pigmentbeimischung zugegeben werden.

Die Erfindung soll nachstehend anhand zweier Ausführungsbeispiele näher erläutert werden.

Gemäß erstem Ausführungsbeispiel ist die Fasermischung, wie sie aus dem jeweiligen Einzug der jeweiligen Krempel zugeführt wird, identisch, beispielsweise besteht diese aus Polyesterfasern 1,7 dtex mit 38mm Stapel- bzw. Faserlänge.

Das Materialeinzugsverhältnis der Mischung Kreuzleger zur Mischung Längsleger beträgt im Wesentlichen 5:3.

Dadurch, dass das Vlies bei Schaumauftrag, der mehrstufig erfolgen kann und welcher bis zu 40g/m² beträgt, beidseitig um einige Zentimeter einspringt, muss für ein Übermaß gesorgt werden bzw. der Randbeschnitt unter Beachtung dieses Einspringens eingestellt sein.

Maßgeblich für die späteren Eigenschaften des Grundvliesstoffes als Beschichtungsträger ist die in Längsrichtung gegebene Dimensionsstabilität, und zwar unter Beachtung der Tatsache, dass gemäß Ausführungsbeispiel sowohl der Schaum- als auch der Pastenauftrag des Binderstrichs über eine entsprechende Rakeltechnik vorgenommen wird. Beispielsweise Längsfestigkeiten liegen im Bereich von >250N/5cm.

Die Oberflächen des Grundvlieses können gleichzeitig zur Bildung einer Sperrschicht auf beiden Seiten ausgerüstet werden. Auf einer ersten, z.B. unterseitigen Grundvliesseite liegt kreuzgelegter Faserflor vor. Diese Seite wird mit einem ca. 5g/m² Binderstrich versehen. Die Binderstrichmischung weist ca. 4,5g/m² harten Binder und 0,5g/m² Pigment, z.B. Ruß auf. Auf der zweiten Grundvliesseite, die auch als Oberseite bezeichnet werden kann, liegt längsgelegter Faserflor vor. Hier erfolgt eine Beschichtung mit einem Binderstrich von 15g/m², bestehend aus 14g/m² Binder und 1g/m² Pigment zur besseren Erkennbarkeit dieser beschichteten Seite. Die 14g/m² Binder liegen z. B. als Mischung ca. 2/3 weicher und 1/3 harter Binder vor.

Durch eine gemäßigte Trocknertemperatur unterhalb der Vernetzungstemperatur des eingesetzten Bindersystems erfolgt eine zusätzliche Glättung, Verdichtung und/oder Versteifung der Oberfläche, und zwar durch eine schnelle Vernetzungsreaktion.

Der so erhaltene Grundvliesstoff kann dann einer weiteren Verarbeitung, insbesondere der Beschichtung mit einem Deckstrich, zugeführt werden.

Gemäß nachstehendem, das Verständnis der Erfindung erleichternden Beispiel wird die Herstellung eines Grundvlieses von 120 g/m² aus 100 % PES-Fasern beschrieben.

Die Fasermischung, wie sie aus dem jeweiligen Einzug der jeweiligen Krempel zugeführt wird, weist eine Mischung aus 50 % 3,3 dtex mit 60 mm Stapel- bzw. Faserlänge und 50 % 1,8 dtex mit 38 mm Stapel- bzw. Faserlänge auf.

Das Materialeinzugsverhältnis der Mischung Kreuz zur Mischung Längs beträgt im Wesentlichen 1:1, wobei die beiden Materialien, Mischung Kreuz und Mischung Längs mittels Wasserstrahltechnologie verfestigt und anschließend getrocknet und in Linie mit einem Bindemittel versehen werden.

Das Auftragen des Bindemittels erfolgt beidseitig mittels Schaumauftragung von jeweils 10 g/m².

Als Bindemittel wird eine Mischung aus 70 % selbstvernetzendem EVA-Copolymer und 30 % Melamin-Formaldehydharz verwendet. Bzgl. des Mischungsverhältnisses kann variiert werden. Wird dem Bindemittel beispielsweise ein größerer Anteil Melamin-Formaldehydharz beigemengt, intensiviert dies die Härte und Steifigkeit des hergestellten Grundvlieses.

Nach dem Aufbringen des Bindemittels muss das bearbeitete Vlies zunächst bei einer Temperatur von 130 °C getrocknet werden, um es anschließend bei 150 °C zu verpressen.

Das durch diese Verfahrensweise hergestellte Grundvlies weist eine Flächenmasse von 141 g/m² bei einer Dicke von 0,83 mm auf. Die Höchstzugkraft in Längsrichtung beträgt 573 N/5 cm, in Querrichtung 339 N/5 cm. Zudem wird eine Dehnung in Längsrichtung von 34 % und in Querrichtung von 82 % erreicht.

Eine wahlweise anschließende Kalandrierung des hergestellten Grundvlieses führt zu einer Verringerung der Dicke und zu einer Änderung der zu erreichenden Höchstzugkraft und Dehnung in Längsrichtung des bearbeiteten Grundvlieses.

Die aufgrund der dargelegten Ausführungsbeispiele hergestellten und ausgerüsteten Vliesstoffe können beispielsweise als Beschichtungsträger für bereits erwähnte Dachunterspannbahnen verwendet werden.

Zudem ist es denkbar, den gewonnenen Grundvliesstoff als Schleifmittelträger zu verwenden. Es existieren verschiedenste Schleifwerkzeugformen, die durch das Aufbringen von Kornstoffen auf ein Trägermaterial mittels Bindungsmittel, wie z. B. Kunstharz, hergestellt werden. Auf den Grundvliesstoff wird bei einer derartigen Verwendung die Schleifkörnung mittels Bindungsmittel aufgetragen. Schleifvorgänge werden durch geeignete Schleifmittelträger maßgeblich beeinflusst. Daher ist das Trägermaterial, in diesem Fall der Grundvliesstoff, eine wichtige Voraussetzung zur Herstellung eines hochwertigen Schleifmittels.

## Patentansprüche

1. Verfahren zur Herstellung eines Grundvliesstoffes als Beschichtungsträger, auf der Basis einer Polyesterfaser (PES)-Mischung durch Kreuz- und Längslegung des Faserflors,
**dadurch gekennzeichnet, dass**
das Verhältnis des Fasereinzugs zwischen der Kreuz- und Längskrempel im Wesentlichen bei 5:3 liegt, wobei eine erste Grundvliesseite aus kreuzgelegtem Faserflor und eine zweite Grundvliesseite aus längsgelegtem Faserflor besteht und die Vliesschichten ein Flächengesamtgewicht von ca. 70 - 300 g/m² aufweisen sowie die Verfestigung mittels Hochdruckwasserstrahlen erfolgt, eine Ausrüstung der ersten und der zweiten Grundvliesseite mit einem Binder in einem Arbeitsschritt erfolgt und anschließend eine Behandlung oberhalb der Vernetzungstemperatur des Binders oder des Bindersystems vorgenommen wird, um eine gezielte Glättung, Verdichtung und/oder Versteifung des Grundvliesstoffes zu erreichen.

2. Verfahren nach Anspruch 1,
**dadurch gekennzeichnet, dass**
der Binder mittels Schaum- oder Pastenauftrag auf die jeweilige Grundvliesseite aufgebracht wird.

3. Verfahren nach Anspruch 2,
**dadurch gekennzeichnet, dass**
der Schaumauftrag mittels Rakel und der Pastenauftrag mittels Luftrakel bzw. Schlitzdüse vorgenommen wird.

4. Verfahren nach einem der vorangegangenen Ansprüche,
**dadurch gekennzeichnet, dass**
auf der ersten Grundvliesseite ein Binderstrich von ca. 5 - 50 g/m² aufgebracht wird.

5. Verfahren nach einem der vorangegangenen Ansprüche,
**dadurch gekennzeichnet, dass**
auf der zweiten Grundvliesseite ein Binderstrich von ca. 15g/m² aufgebracht wird.

6. Verfahren nach Anspruch 5,
**dadurch gekennzeichnet, dass**
der Binderstrich zur Erkennbarkeit der jeweiligen Grundvliesseite eine Pigmentbeimischung enthält.

7. Verwendung eines nach einem der vorangegangen Ansprüche hergestellten Grundvliesstoffes als Dachunterspannbahn.

8. Verwendung eines nach einem der Ansprüche 1 bis 6 hergestellten Grundvliesstoffes als Schleifmittelträger.

## Claims

1. Method for producing a base nonwoven as carrier for a coating on the basis of a polyester fiber (PES) mixture by crosswise and lengthwise laying of the fiber web,
**characterized in that**
the fiber feed ratio between the crosswise and lengthwise carding machine is substantially 5:3, wherein a first side of the base nonwoven is made up of crosswise laid fiber web and a second side of the base nonwoven is made up of lengthwise laid fiber web and the nonwoven layers have a total weight per unit area of about 70 - 300 g/m² and the bonding is accomplished by means of high-pressure water entanglement, the first and the second side of the base nonwoven are provided with a binding agent in one working step and a treatment above the cross-linking temperature of the binding agent or binding agent system is carried out subsequently so as to obtain a desired smoothing, compaction and/or stiffening of the base nonwoven.

2. Method according to claim 1,
**characterized in that**
the binding agent is applied to the respective side of the base nonwoven by means of foam application or paste application.

3. Method according to claim 2,
**characterized in that**
the foam application is carried by means of a doctor blade and the paste application by means of an air doctor blade or slotted nozzle.

4. Method according to one of the preceding claims,
**characterized in that**
an amount of binding agent of about 5 - 50 g/m² is applied to the first side of the base nonwoven.

5. Method according to one of the preceding claims,
**characterized in that**
an amount of binding agent of about 15 g/m² is applied to the second side of the base nonwoven.

6. Method according to claim 5,
**characterized in that**
the amount of binding agent contains a pigment admixture in order to distinguish the respective side of the base nonwoven.

7. Use of a base nonwoven produced according to one of the preceding claims as roof underlining sheet.

8. Use of a base nonwoven produced according to one of claims 1 to 6 as an abrasive carrier.

## Revendications

1. Procédé pour la fabrication d'un matériau non-tissé de base à titre de support de revêtement, sur la base d'un mélange de fibres de polyester par pose en croix et en longueur de la nappe de fibres,
**caractérisé en ce que**
le rapport de remettage des fibres entre la carde croisée et la carde longitudinale est sensiblement environ 5: 3, un premier côté de la nappe de base étant constitué d'une nappe de fibres posées en croix et un second côté de la nappe de base étant constitué d'une nappe de fibres posées en longueur, et les couches de nappe présentent un poids total surfacique d'environ 70 à 300 g/m², et dans lequel une consolidation a lieu au moyen de jets d'eau sous haute pression, on procède à l'application d'un liant sur le premier et le second côté de la nappe de base dans une passe de travail et on exécute ensuite un traitement au-dessus de la température de réticulation du liant ou du système de liant, afin de d'atteindre simultanément un lissage, un compactage et/ou une rigidification du matériau non-tissé de base.

2. Procédé selon la revendication 1,
**caractérisé en ce que** le liant est appliqué par application sous forme de mousse ou sous forme de pâte sur le côté respectif de la nappe de base.

3. Procédé selon la revendication 2,
**caractérisé en ce que** l'application de mousse est exécutée au moyen d'une raclette et l'application de pâte est exécutée au moyen d'une raclette à air ou d'une buse à fente.

4. Procédé selon l'une des revendications précédentes,
**caractérisé en ce que** l'on applique un trait de liant d'environ 5 à 50 g/m² sur le premier côté de la nappe de base.

5. Procédé selon l'une des revendications précédentes,
**caractérisé en ce que** l'on applique un trait de liant d'environ 15 g/m² sur le second côté de la nappe de base.

6. Procédé selon la revendication 5,
**caractérisé en ce que** le trait de liant contient, pour permettre la reconnaissance du côté respectif de la nappe de base, un additif pigmenté.

7. Utilisation d'un matériau non-tissé de base fabriqué selon l'une des revendications précédentes à titre de bande de sous-toiture.

8. Utilisation d'un matériau non-tissé de base fabriqué selon l'une des revendications 1 à 6 à titre de support pour abrasif.
